Europäisches Patentamt

European Patent Office

Office européen des brevets

(19)

(11) Veröffentlichungsnummer: **0 473 123 A1**

## (12) EUROPÄISCHE PATENTANMELDUNG

(21) Anmeldenummer: **91114390.7**

(22) Anmeldetag: **27.08.91**

(51) Int. Cl.5: **B60R 13/06**, B29C 47/02, B60J 10/00

(30) Priorität: **28.08.90 DE 4027191**

(43) Veröffentlichungstag der Anmeldung:
**04.03.92 Patentblatt 92/10**

(84) Benannte Vertragsstaaten:
**DE FR GB IT**

(71) Anmelder: **METZELER Automotive Profiles GmbH**
**Bregenzer Strasse 133**
**W-8990 Lindau / Bodensee(DE)**

(72) Erfinder: **Kranz, Jürgen**
**Kirchstrasse 2**
**W-8990 Lindau/Bodensee(DE)**

(74) Vertreter: **Michelis, Theodor, Dipl.-Ing. et al**
**Tattenbachstrasse 9**
**W-8000 München 22(DE)**

(54) **Verfahren zur Herstellung eines Dichtungsprofiles und nach dem Verfahren hergestelltes Dichtungsprofil.**

(57) Bei einem Verfahren zur Herstellung eines Dichtungsprofils, insbesondere für Kraftfahrzeuge, das aus einem kompakten und einem zelligen, hinreichend elastischen Material hergestellt und um enge Radien gebogen wird, ist zur Vermeidung einer Faltenbildung des zelligen Materials beim Biegen erfindungsgemäß vorgesehen, daß das Profil mit einem Klemmbereich aus einem kompakten Elastomer, einer U-förmigen geschlitzten Metalleinlage und einem Dichtbereich aus Moosgummi einstückig koextrudiert und das Profil vor dem Biegen um enge Radien in den entsprechenden Längenbereichen unter bleibender Aufdehung der Metalleinlage vorgereckt wird.

Fig.1

Die Erfindung bezieht sich auf ein Verfahren zur Herstellung eines Dichtungsprofils, insbesondere für Kraftfahrzeuge, das aus einem kompakten und aus einem zelligen, hinreichend elastischen Material hergestellt und faltenfrei um enge Radien gebogen wird.

Bei Dichtungsprofilen, die aus zwei Profilbereichen mit unterschiedlichen Materialien und dabei insbesondere mit einem Bereich aus Moosgummi hergestellt werden, besteht bei einem Biegen dieser Profile um enge Radien die Gefahr, daß der weichere Bereich in diesen Radien Falten wirft und damit eine Verminderung der Abdichtung bewirkt. Derartige Profile bestehen dabei üblicherweise aus einem Hauptprofil aus kompakten PVC im wesentlichen als Klemm- und Haltebereich, sowie einem angeklebten Moosgummiprofilbereich, der die eigentliche Abdichtfunktion übernimmt. Um dabei ein derartiges Faltenwerfen zu vermeiden, ist es üblich, den Moosgummibereich vor dem Ankleben etwas zu spannen und unter dieser Vorspannung mit dem PVC-Profilbereich zu verbinden, wodurch die Gefahr einer Faltenbildung stark vermindert wird.

Ein solches Verfahren zur Herstellung eines derartigen Dichtungsprofils ist jedoch sehr aufwendig und mit einer Reihe von Imponderabilien behaftet, die insbesondere eine gleichmäßige Vorspannung des Moosgummibereiches betreffen und darüber hinaus eine die Dichtwirkung des Moosgummis beeinträchtigende Vorspannung auch in glatten Bereichen des Profilverlaufes zur Folge haben, wo eine solche Vorspannung an sich nicht erforderlich ist.

Der vorliegenden Erfindung liegt daher die Aufgabe zugrunde, ein Verfahren und ein nach diesem Verfahren hergestelltes Dichtungsprofil anzugeben, das sehr viel einfacher herzustellen ist und bei dem gezielt nur in den kritischen Bereichen eine möglicherweise beim Biegen auftretende Faltenbildung sicher vermieden wird.

Zur Lösung dieser Aufgabe ist erfindungsgemäß vorgesehen, daß das Profil mit einem Klemmbereich aus einem kompakten Elastomer und einer U-förmigen, geschlitzten Metalleinlage und einem Dichtbereich aus Moosgummi einstückig koextrudiert und das Profil vor dem Biegen um enge Radien in den entsprechenden Längenbereichen unter bleibender Aufdehnung der Metalleinlage vorgereckt wird.

Zweckmäßigerweise wird dabei die Metalleinlage so weit gereckt, daß der anextrudierte Moosgummibereich eine Vorspannung in axialer Richtung erfährt.

Mit dem erfindungsgemäßen Verfahren ist es also einmal möglich, ein Profil aus einem einheitlicheren elastischen Material zu erhalten, das in einem Arbeitsgang koextrudiert werden kann. Darüber hinaus wird durch das Recken der Metalleinlage bzw. des Hauptstranges des Profils der Moosgummibereich nur in den Bereichen vorgespannt, in denen eine Faltenbildung auftreten kann, während in den glatten Profilabschnitten das Moosgummi in seiner natürlichen Konsistenz erhalten bleibt und damit die volle Dichtwirkung entfalten kann.

Besonders vorteilhaft ist es dabei, wenn eine Metalleinlage mit abwechselnd seitlichen Einschnitten und mittigen Schlitzen verwendet wird.

Gemäß der Erfindung weist ein nach dem beschriebenen Verfahren hergestelltes Dichtungsprofil einen Klemmbereich aus einem kompakten Elastomer mit einer U-förmigen geschlitzten Metalleinlage, die abschnittsweise vorreckbar ist, sowie einen mit dem Klemmbereich einstückig koextrudierten Dichtbereich aus Moosgummi auf.

Zweckmäßigerweise besteht die Metalleinlage für ein solches Dichtungsprofil aus einem flachen Blechstreifen, der jeweils einander gegenüberliegend seitliche, sich über mindestens 1/3 der Streifenbreite erstreckende Einschnitte und in Längsrichtung jeweils zwischen einem Paar von Einschnitten etwa mittige, querverlaufende Schlitze von der Breite etwa 1/3 der Blechstreifenbreite aufweist.

Besonders vorteilhaft ist es, wenn die mittigen Schlitze abwechselnd geringfügig gegeneinander seitlich versetzt sind.

Anhand einer schematischen Zeichnung sind Aufbau und Funktionsweise eines Ausführungsbeispiels nach der Erfindung näher erläutert. Dabei zeigen

Fig. 1    einen Querschnitt durch ein entsprechendes Dichtungsprofil mit Profilbereichen unterschiedlichen Materials und

Fig. 2    eine Aufsicht auf die ebene, noch nicht gefaltete Metalleinlage mit den entsprechenden Einschnitten und Schlitzen.

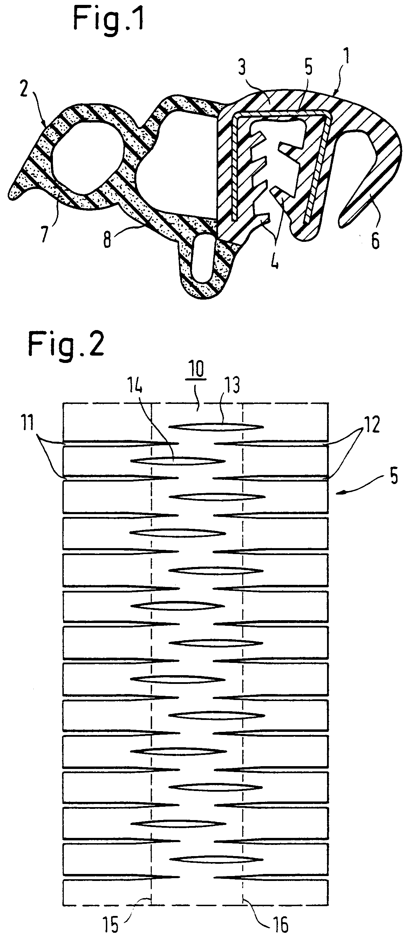

Wie man aus Fig. 1 ersieht, besteht das Dichtungsprofil aus einem Klemmbereich 1 aus einem kompakten Elastomer und einem weicheren Dichtbereich 2 aus Moosgummi. Der Klemmbereich 1 weist einen U-förmigen Profilabschnitt 3 mit innenliegenden Klemmlippen 4 sowie eine entsprechend U-förmig gebogene Metalleinlage 5 auf, die nachfolgend noch im einzelnen beschrieben wird, wobei seitlich an den U-förmigen Profilbereich 3 eine Dichtlippe 6, ebenfalls aus kompaktem Gummi, anvulkanisiert sein kann.

Der Dichtbereich 2 besteht bei dem dargestellten Ausführungsbeispiel aus einem schlauchförmigen, außenliegenden Dichtabschnitt 7 und einem innenliegenden, zunächst U-förmig gestalteten Dichtabschnitt 8, der seitlich an einen Schenkel des U-förmigen Profilabschnittes 3 anextrudiert ist.

Die Metalleinlage 5 des Dichtungsprofils ist im einzelnen in Fig. 2 in Aufsicht im noch glatten Zustand dargestellt. Dafür ist ein glatter Blechstreifen 10 vorgesehen, der seitliche, jeweils paarweise einander gegenüberliegende Einschnitte 11 und 12 aufweist, die sich bei dem dargestellten Ausführungsbeispiel jeweils über etwas mehr als 1/3 der Breite des Blechstreifens 10 erstrecken. In Längsrichtung des Blechstreifens 10 sind ferner jeweils zwischen einzelnen Paaren von Einschnitten 11 und 12 zusätzlich noch Schlitze 13 und 14 jeweils quer zur Längserstreckung des Blechstreifens 10 in diesen eingeschnitten, wobei sich die Schlitze 13 und 14 auch jeweils etwa über 1/3 der Breite des Blechstreifens 10 erstrecken.

Wie man aus dem dargestellten Ausführungsbeispiel erkennt, sind dabei die Schlitze 13 und 14 abwechselnd jeweils geringfügig gegeneinander seitlich versetzt angeordnet.

Wie aus der Zeichnung ersichtlich, ist diese Metalleinlage 5 bereits bei der Herstellung, d.h. dem Einschneiden der Schlitze, geringfügig vorgereckt, so daß sich die dargestellten Spalte ergeben, so daß beim Extrudieren der Gummi durch die Spalten hindurchtreten kann und somit ein besserer Verbund geschaffen wird.

Dieser Blechstreifen 10 wird dann entlang der gestrichelten Linien 15 und 16 U-förmig abgekantet und bildet dann die Metalleinlage 5 im U-förmigen Profilabschnitt 3 des Dichtungsprofils.

Das in Fig. 1 dargestellte Dichtungsprofil kann somit in einem Stück als Einheit koextrudiert werden und liegt als glattes Profil vor.

Beim Einsatz eines solchen Dichtungsprofils im Kraftfahrzeugbau muß es dann jedoch oftmals um Kanten mit sehr engen Radien herumgeführt werden. Um in diesen engen Radienbereichen eine Stauchung und damit Faltenbildung des seitlichen Dichtbereichs 2 zu vermeiden, wird der Profilbereich 1 bzw. die Metalleinlage 5 vor dem Biegen des Dichtungsprofils gerade über die Länge eines solchen Radiusbereiches gestreckt, so daß sich die Metalleinlage 5 noch weiter reckt und sich die Einschnitte 11, 12 und die Schlitze 13, 14 noch weiter aufspreizen, als das in Fig. 2 dargestellt ist. Durch diese bleibende Längung der Metalleinlage 5 und damit des Profilabschnittes 3 erfährt auch das Moosgummi des Dichtbereichs 2 eine entsprechende bleibende Vorspannung jeweils in den Bereichen, in denen das Dichtungsprofil später entlang der engen Radien verläuft. Wenn nun das Dichtungsprofil entsprechend gebogen wird, bewirkt die auf das Moosgummi aufgebrachte Vorspannung, daß sich beim Abbiegen das Moosgummi des Dichtbereiches 2 nicht mehr in Falten legt, da durch die Verkürzung des oben oder unten liegenden Bereiches des Dichtabschnittes 2 gerade die Vorspannung im Moosgummi aufgehoben oder nur geringfügig überschritten wird.

Damit ergibt sich also ein Dichtungsprofil mit Materialbereichen unterschiedlicher Härte, das durch die innenliegende reckbare Metalleinlage auch um sehr enge Radien gebogen bzw. gezogen werden kann, ohne daß dabei Faltungen im weicheren Moosgummibereich auftreten.

Es sei dabei noch darauf hingewiesen, daß der in Fig. 1 dargestellte Querschnitt nur eine mögliche Gestaltung eines solchen Dichtungsprofils darstellt, wobei selbstverständlich auch andere Konfigurationen möglich sind, soweit sie vom Grundprinzip der Erfindung Gebrauch machen.

## Patentansprüche

1. Verfahren zur Herstellung eines Dichtungsprofils, insbesondere für Kraftfahrzeuge, das aus einem kompakten und einem zelligen, hinreichend elastischen Material hergestellt und faltenfrei um enge Radien gebogen wird, dadurch gekennzeichnet, daß das Profil mit einem Klemmbereich aus einem kompakten Elastomer und einer U-förmigen, geschlitzten Metalleinlage und einem Dichtbereich aus Moosgummi einstückig koextrudiert und das Profil vor dem Biegen um enge Radien in den entsprechenden Längenbereichen unter bleibender Aufdehnung der Metalleinlage vorgereckt wird.

2. Verfahren nach Anspruch 1, dadurch gekennzeichnet, daß die Metalleinlage soweit gereckt wird, daß der anextrudierte Moosgummibereich eine Vorspannung in axialer Richtung erfährt.

3. Verfahren nach Anspruch 1, dadurch gekennzeichnet, daß eine Metalleinlage mit abwechselnd seitlichen Einschnitten und mittigen Schlitzen verwendet wird.

4. Dichtungsprofil, das nach dem Verfahren nach Anspruch 1 hergestellt ist, dadurch gekennzeichnet, daß das Profil einen Klemmbereich (1) aus einem kompakten Elastomer mit einer U-förmigen, geschlitzten Metalleinlage (5), die abschnittsweise vorreckbar ist, sowie einen mit dem Klemmbereich (1) einstückig koextrudierten Dichtbereich (2) aus Moosgummi aufweist.

5. Dichtungsprofil nach Anspruch 4, dadurch gekennzeichnet, daß die Metalleinlage (5) aus einem flachen Blechstreifen (10) besteht, der jeweils einander gegenüberliegend seitliche, sich über mindestens 1/3 der Streifenbreite erstreckende Einschnitte (11, 12) und in Längsrichtung jeweils zwischen zwei Paaren von Einschnitten (11, 12) etwa mittige Schlitze (13, 14) von der Breite etwa 1/3 des Blechstreifens aufweist.

6. Dichtungsprofil nach Anspruch 5, dadurch gekennzeichnet, daß die mittigen Schlitze (13, 14) abwechselnd geringfügig gegeneinander seitlich versetzt sind.

# Fig.1

# Fig.2

| | EINSCHLÄGIGE DOKUMENTE | | EP 91114390.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| X | FR - A - 2.324 852 (DRAFTEX DEVELOPMENT AG) * Fig. 2,3,8; Seite 5, Zeilen 34-40; Seite 6, Zeilen 1-31 * -- | 1,3,4, 5 | B 60 R 13/06 B 29 C 47/02 B 60 J 10/00 |
| A | DE - A - 2 501 774 (DRAFTEX DEVELOPMENT AG) * Fig. 1-3; Anspruch 10 * -- | 1,3,4, 5 | |
| A | EP - A - 0 252 659 (SILENT CHANNEL PRODUCTS LIMITED) * Fig. 1-4; Ansprüche 7-11 * -- | 1,3,4, 5 | |
| A | DE - A - 2 734 971 (SCHLEGEL (UK) LTD.) * Fig. 5; Seite 10, Zeilen 20-29 * ---- | 1,4 | |
| | | | RECHERCHIERTE SACHGEBIETE (Int. Cl.⁵) |
| | | | B 60 R B 29 C B 60 J E 06 B F 16 J |

Der vorliegende Recherchenbericht wurde für alle Patentansprüche erstellt.

| Recherchenort | Abschlußdatum der Recherche | Prüfer |
|---|---|---|
| WIEN | 20-11-1991 | SCHMICKL |